(19) Europäisches Patentamt / European Patent Office / Office européen des brevets

(11) **EP 2 963 530 A1**

(12) **EUROPEAN PATENT APPLICATION**
published in accordance with Art. 153(4) EPC

(43) Date of publication:
06.01.2016 Bulletin 2016/01

(21) Application number: 14756709.3

(22) Date of filing: 21.02.2014

(51) Int Cl.:
*G06F 3/048* (2006.01)      *G06F 3/041* (2006.01)
*G06F 3/0488* (2013.01)

(86) International application number:
PCT/JP2014/054181

(87) International publication number:
WO 2014/132893 (04.09.2014 Gazette 2014/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.02.2013 JP 2013037427

(71) Applicant: Alps Electric Co., Ltd.
Tokyo 145-8501 (JP)

(72) Inventors:
• HAYASAKA, Satoshi
Tokyo 145-8501 (JP)
• NAKAJIMA, Satoshi
Tokyo 145-8501 (JP)

(74) Representative: Klunker . Schmitt-Nilson . Hirsch
Patentanwälte
Destouchesstraße 68
80796 München (DE)

(54) **OPERATION DETECTION DEVICE**

(57)      [Object] To provide an operation detection device capable of recognizing gestures of an operating body particularly in a simpler and more appropriate manner in comparison with the related art.

[Solution] The operation detection device comprises a detection unit capable of detecting position coordinates of at least one operating body moved for operation relative to an operation surface, and a control unit calculating an operation signal of the operating body on the basis of the position coordinates, wherein the control unit sets a virtual circle passing substantially the position coordinates, and calculates, as the operation signal, change in at least one of center coordinates of the virtual circle, a radius of the virtual circle, and a rotational angle of the virtual circle with the lapse of time.

FIG. 2

IN 0-TH CYCLE

EP 2 963 530 A1

**Description**

Technical Field

The present invention relates to an operation detection device capable of identifying gestures of an operating body, such as scroll, zoom and rotate gestures.

Background Art

Patent Literature (PTL) 1 discloses an invention regarding an operation input detection device using a touch panel.
In Patent Literature 1, sample patterns for plural types of gesture motions are previously obtained as a preparation stage, and those sample patterns are stored in a sample pattern storage unit (see [0058], etc. in Patent Literature 1). Practical examples of gestures given by fingers are illustrated in Figs. 11 and 12 of Patent Literature 1.
In Patent Literature 1, after storing the sample patterns, an operation input pattern is extracted, and the operation input pattern is compared with the sample patterns, and the matched sample pattern is selected. Gesture information corresponding to the matched sample pattern is output, and a representation displayed on an operation screen is changed in accordance with the gesture information (see [0059], etc. in Patent Literature 1).

Citation List

Patent Literature

PTL 1: Japanese Unexamined Patent Application Publication No. 2012-203563

Summary of Invention

Technical Problem

Thus, with the operation detection technique described in Patent Literature 1, it is required to obtain the plural types of sample patterns in advance, and to compare the operation input pattern with each of the sample patterns.
Accordingly, there is a problem that an amount of calculation necessary to specify the gesture increases and hence a processing load of a control unit increases. As a result, a drawback such as a delay in change of a representation in response to the gesture is more likely to occur. Another problem is a risk that false detection may occur in recognition of a complex sample pattern.
The present invention is intended to solve the above-mentioned problems with the related art, and an object of the present invention is to provide an operation detection device capable of recognizing gestures of an operating body particularly in a simpler and more appropriate manner in comparison with the related art.

Solution to Problem

The present invention provides an operation detection device comprising:

a detection unit capable of detecting position coordinates of at least one operating body moved for operation relative to an operation surface, and a control unit calculating an operation signal of the operating body on basis of the position coordinates,
wherein the control unit calculates, as the operation signal, change in at least one of center coordinates of a virtual circle passing substantially the position coordinates, a radius of the virtual circle, and a rotational angle of the virtual circle with lapse of time.

Thus, according to the present invention, the virtual circle is set on the basis of the position coordinates, and change of the center coordinates, the radius, or the rotational angle of the virtual circle is calculated as the operation signal of the operating body. The calculated operation signal is gesture information of the operating body, and a gesture of the operating body can be simply and properly recognized from the calculated operation signal. In particular, according to the present invention, since the center coordinates, the radius, or the rotational angle of the virtual circle is calculated on the basis of the position coordinates of the operating body, the operation signal can be simply and quickly obtained. Hence a representation can be changed in prompt response to the gesture of the operating body.
In the present invention, preferably, the control unit calculates average coordinates of respective position coordinates of the plural operating bodies, which are moved for operation at the same time relative to the operation surface, as the center coordinates, an average value of distances between the center coordinates and the respective position coordinates as the radius, and an average value of angles formed by the center coordinates and the respective position coordinates as the rotational angle. According to the present invention, even when there are plural operating bodies that are moved for operation at the same time relative to the operation surface, changes of the center coordinates, the radius, and the rotational angle of the virtual circle with the lapse of time can be each calculated as the operation signal.

In the above, change of the center coordinates with the lapse of time may be calculated as a scroll gesture operation signal, change of the radius with the lapse of time may be calculated as a zoom gesture operation signal, and change of the rotational angle with the lapse of time may be calculated as a rotate gesture operation signal.

Alternatively, in the present invention, the center coordinates may be set in advance, and when one operating body is moved for operation relative to the operation surface, the control unit may calculate a distance between the position coordinates of the one operating body and the center coordinates as the radius, and an angle formed by the position coordinates of the one operating body and the center coordinates as the rotational angle. Furthermore, when the plural operating bodies are moved for operation at the same time relative to the operation surface, the control unit may calculate an average value of distances between the center coordinates and the respective position coordinates of the plural operating bodies as the radius, and an average value of angles formed by the center coordinates and the respective position coordinates as the rotational angle. According to the present invention, when the operation surface is operated by one or more operating bodies, changes of the radius and the rotational angle of the virtual circle with the lapse of time can be each simply and properly calculated as the operation signal. Thus, in the present invention, the number of the operating bodies may be one.

In the above, preferably, a center of the operation surface is set at the center coordinates. With this feature, changes of the radius and the rotational angle of the virtual circle with the lapse of time can be each more easily calculated as the operation signal over the entire operation surface.

In the present invention, a central region of the operation surface may be a region in which a scroll gesture is to be performed, an outer peripheral region around the central region may be a region in which a rotate gesture is to be performed, change of the radius with the lapse of time may be calculated in the central region as the operation signal for the scroll gesture, and change of the rotational angle with the lapse of time may be calculated in the outer peripheral region as the operation signal for the rotate gesture. By dividing an operation region of the operating body in such a way, the scroll gesture and the rotate gesture can be properly recognized particularly even when the number of the operating bodies is one.

In the present invention, preferably, the operation surface has a circular shape in a plan view. With this feature, particularly when the outer peripheral region is set as a rotate region as mentioned above, it is easier to perform the rotate gesture of the operating body along the outer peripheral region.

In the present invention, preferably, when the number of the operating bodies detected is changed with the lapse of time, the operation signal is calculated with ignorance of the position coordinates of the operating body that is not detected any more. With this feature, changes of the center coordinates, the radius, and the rotational angle of the virtual circle with the lapse of time can be each stably calculated as the operation signal.

In the present invention, preferably, the control unit executes wrap around control. With this feature, change of the rotational angle of the virtual circle with the lapse of time can be properly calculated as the operation signal in the second and subsequent cycles.

Advantageous Effects of Invention

According to the present invention, the virtual circle is set on the basis of the position coordinates, and change of the center coordinates, the radius, or the rotational angle of the virtual circle with motion of the operating body is calculated as the operation signal of the operating body. The calculated operation signal is gesture information of the operating body, and a gesture of the operating body can be simply and properly recognized from the calculated operation signal. In particular, according to the present invention, since the center coordinates, the radius, or the rotational angle of the virtual circle is calculated on the basis of the position coordinates of the operating body, the operation signal can be simply and quickly obtained. Hence a representation displayed on the operation surface can be changed in prompt response to the gesture of the operating body.

Brief Description of Drawings

[Fig. 1] Fig. 1 is a plan view of an operation detection input device according to an embodiment.
[Fig. 2] Fig. 2 is a conceptual view to explain an algorithm (in a 0-th cycle) that is executed in a first embodiment to calculate a gesture signal.

[Fig. 3] Fig. 3 is a conceptual view representing a state in a first cycle subsequent to Fig. 2 particularly in the case of calculating, as the gesture signal, change of center coordinates of a virtual circle with the lapse of time.

[Fig. 4] Fig. 4 is a conceptual view representing a state in a first cycle subsequent to Fig. 2 particularly in the case of calculating, as the gesture signal, change of the radius of a virtual circle with the lapse of time.

[Fig. 5] Fig. 5 is a conceptual view representing a state in a first cycle subsequent to Fig. 2 particularly in the case of calculating, as the gesture signal, change of a rotational angle of a virtual circle with the lapse of time.

[Fig. 6] Fig. 6 is a conceptual view representing a state where the number of fingers (operating bodies) used in giving gestures is changed in the n-th cycle.

[Fig. 7] Fig. 7 is a conceptual view to explain an algorithm (in a 0-th cycle) that is executed in a second embodiment to calculate the gesture signal.

[Fig. 8] Fig. 8 is a conceptual view representing a state in a first cycle subsequent to Fig. 7 particularly in the case of calculating, as the gesture signal, change of the radius or a rotational angle of a virtual circle with the lapse of time.

[Fig. 9] Fig. 9 is a block diagram of the operation detection device according to the embodiment.

[Fig. 10] Fig. 10 is a plan view representing changes of displayed forms in accordance with gestures of fingers (operating bodies).

Description of Embodiments

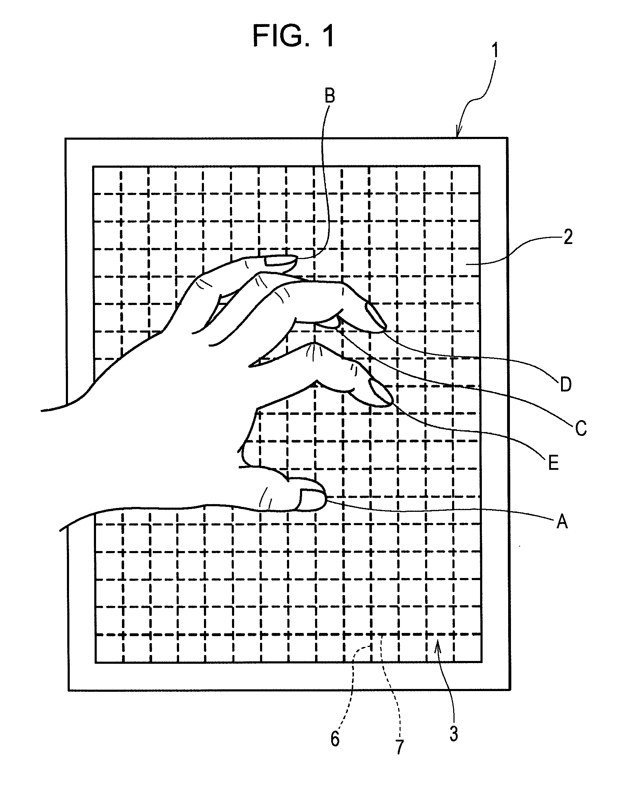

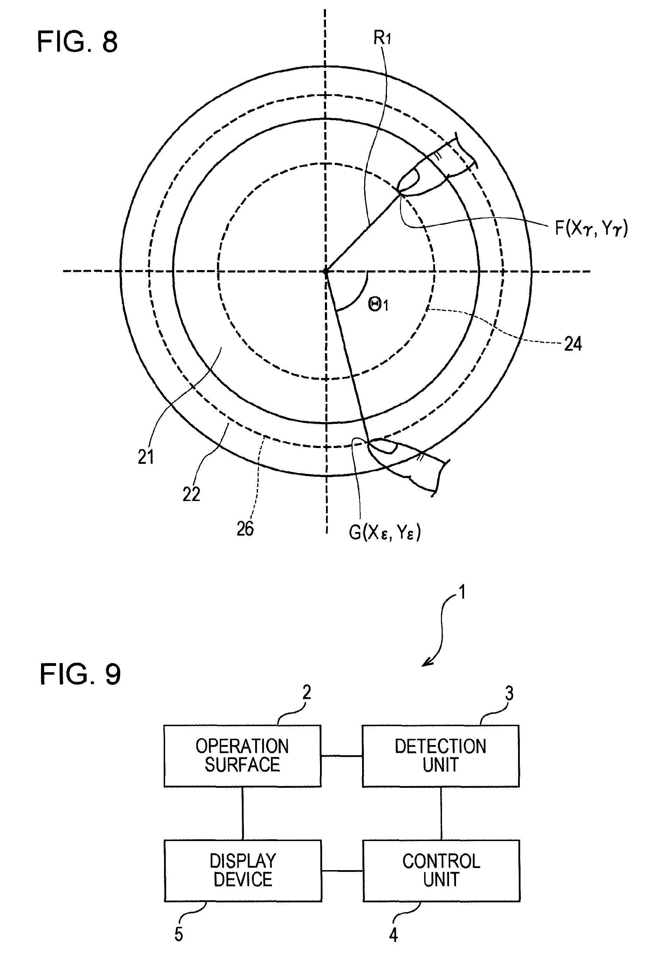

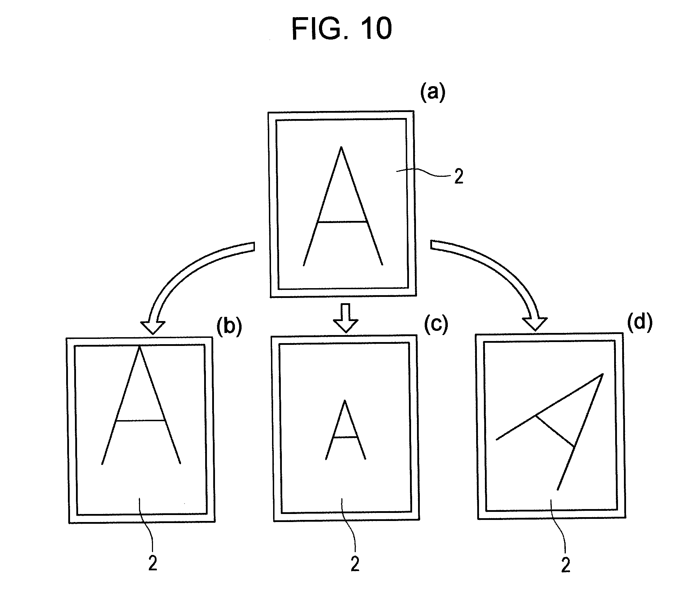

Fig. 1 is a plan view of an operation detection input device according to an embodiment. Fig. 9 is a block diagram of the operation detection device according to the embodiment, and Fig. 10 is a plan view representing changes of displayed forms in accordance with gestures of fingers (operating bodies).

As illustrated in Figs. 1 and 9, an operation detection device 1 illustrated as the embodiment includes, for example, a transparent operation surface 2, a detection unit (sensor) 3 positioned at the rear surface side of the operation surface 2, a control unit 4, and a display device 5 disposed at the rear surface side of both the operation surface 2 and the detection unit 3.

The operation surface 2 is constituted by, e.g., a transparent resin sheet, glass, or plastic.

The detection unit 3 is a capacitive sensor, for example, and it includes many first electrodes 6 and many second electrodes 7, which are arranged in intersecting relation. The electrodes 6 and 7 are each made of, e.g., ITO (Indium Tin Oxide). When the front side of the operation surface 2 is operated by fingers A to E, the electrostatic capacitance between each of the fingers A to E and each of the electrodes 6 and 7 is changed. An operating position of each of the fingers A to E can be detected on the basis of change of the electrostatic capacitance. As techniques for detecting the operating position, there are a mutual capacitance detection type of applying a drive voltage to one of the first electrode 6 and the second electrode 7, and detecting change of the electrostatic capacitance between the other electrode and the finger, thereby detecting the operating position of the finger, and a self-capacitance detection type of detecting the position coordinates of each finger on the basis of change of the electrostatic capacitance between each finger and the first electrode 6 and change of the electrostatic capacitance between each finger and the second electrode 7. However, how to detect the position coordinates of each of the fingers A to E is not a specific matter to be limited here. The detection unit 3 can detect the position coordinates of the finger not only in a state where the finger is in touch with the front side of the operation surface 2, but also in a state where the finger is slightly apart away from the front side of the operation surface 2.

With the detection unit 3 in the embodiment, even when there are plural fingers (operating bodies) that are moved for operation at the same time over the operation surface 2, the number of the fingers A to E and respective position coordinates of those fingers can be detected. Thus, the detection unit 3 can detect the number of fingers moved for operation over the operation surface 2 and the position coordinates of each finger.

The control unit 4 illustrated in Fig. 9 calculates a gesture signal (operation signal) on the basis of the position coordinates detected by the detection unit 3. Here, the term "gesture" implies that one finger or two more fingers are moved for operation over the operation surface 2 in accordance with predetermined patterns. Practical examples of the gesture include an operation (scroll) of, from a state where the five fingers are in touch with the operation surface 2 as illustrated in Fig. 1, linearly moving the fingers A to E while keeping the same relative positional relation, an operation (zoom) of relatively spreading or contracting the five fingers A to E, and an operation (rotate) of rotating the fingers A to E.

The display device 5 illustrated in Fig. 9 is, e.g., a liquid crystal display or an organic EL, but it is not limited to particular one. Upon receiving the gesture signal from the control unit 4, the display device 5 executes change of a representation in accordance with the received gesture signal.

Assume, for example, that a character "A" is displayed on the operation surface 2 as illustrated in Fig. 10(a). Now, when a user performs a gesture of putting the five fingers A to E on the operation surface A as illustrated in Fig. 1, and moving the fingers A to E upward on the drawing sheet, the character "A" is also moved upward following the gesture (Fig. 10(b)). In other words, the character "A" can be scrolled. The gesture of moving the representation displayed on the operation surface 2 upward, downward, leftward or rightward is called a "scroll" gesture. When the user performs a gesture of moving the fingers A to E in a direction of contracting the fingers, the character "A" is also reduced in size following the gesture (Fig. 10(c)). In other words, the size of the character "A" can be increased or reduced. Such a gesture of enlarging or reducing the representation displayed on the operation surface 2 is called a "zoom" gesture. When the user performs a gesture of rotating the fingers A to E illustrated in Fig. 1, the character "A" can also be rotated (turned) following the gesture (Fig. 10(d)). In other words, the character "A" can be rotated to the right or the left. Such a gesture of rotating the representation displayed on the operation surface 2 is called a "rotate" gesture.

While the gestures have been described in connection with the character displayed on the operation surface 2 with reference to Fig. 10, the operation detection device 1 according to the embodiment may be, e.g., a car navigator installed in a vehicle such that a map displayed on the operation surface 2 is scrolled, zoomed, or rotated in accordance with the gesture operation of the fingers. In another example, the operation detection device 1 may be an audio device installed in a center console such that volume adjustment, skip of a song (track), selection of a song, etc. are executed in accordance with gesture operations of the fingers. In still another example, the operation detection device 1 may be an operation device for various functions of a vehicle such that adjustment of temperature, adjustment of an air conditioner, adjustment of a seat, etc. are executed in accordance with gesture operations of the fingers. It is to be noted that the operation detection device 1 is not limited to use in the vehicle, and it can be applied to a portable device, etc. as well. Furthermore, instead of the configuration where a representation is displayed on the operation surface 2, the configuration may be modified such that a display surface is prepared in a position other than the operation surface 2, and that the representation on the display surface is changed in response to a gesture of the fingers moved over the operation surface 2. In the configuration that the display surface is disposed separately from the operation surface 2, the operation surface 2 is not necessarily required to be transparent.

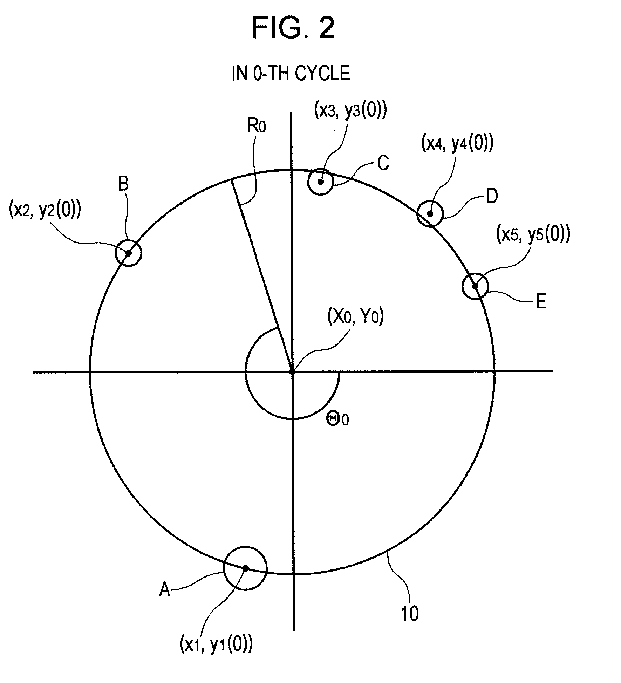

Fig. 2 illustrates respective position coordinates of the fingers A to E in the state where the five fingers A to E are in touch with the operation surface 2 as illustrated in Fig. 1.

The respective position coordinates illustrated in Fig. 2 correspond to an initial state where the fingers are just placed on the operation surface 2 before performing a gesture. Fig. 2 is assumed to indicate a 0-th cycle.

Here, the finger A is the thumb that has a maximum contact area with respect to the operation surface 2 (i.e., a maximum area of a fingertip opposing to the operation surface 2) in comparison with the other fingers B to E. The detection unit 3 is able to detect the size of the contact area (i.e., the area of the fingertip opposing to the operation surface), and to recognize the thumb to be the finger A.

Assume that the position coordinates of the finger A are set to $(x_1, y_1)$, the position coordinates of the finger B are set to $(x_2, y_2)$, the position coordinates of the finger C are set to $(x_3, y_3)$, the position coordinates of the finger D are set to $(x_4, y_4)$, and the position coordinates of the finger E are set to $(x_5, y_5)$. The position coordinates are expressed by an x-coordinate and a y-coordinate. To indicate that the position coordinates in Fig. 2 represent values in the 0-th cycle, (0) is attached to each set of the position coordinates.

While, in Fig. 2, the position coordinates of each of the fingers A to E are set substantially to the center of the contact area of each of the fingers A to E with respect to the operation surface 2, a setting method and a setting position are not limited to particular ones. For example, coordinates at which a change amount of the electrostatic capacitance is maximized may be set as the position coordinates for each of the fingers A to E.

When the respective position coordinates of the fingers A to E are detected by the detection unit 3, the control unit 4 calculates center coordinates (X, Y) of a virtual circle from the following formulae 1.

[Math. 1]

$$X = \frac{1}{i_{max}} \sum_{i=1}^{i_{max}} x_i$$

$$Y = \frac{1}{i_{max}} \sum_{i=1}^{i_{max}} y_i$$

An average value (X) of the x-coordinates $(x_1, x_2, x_3, x_4, x_5)$ of the fingers A to E and an average value (Y) of the y-coordinates $(y_1, y_2, y_3, y_4, y_5)$ of the fingers A to E are calculated from the formulae 1.

Thus, the center coordinates (X, Y) can be calculated from the formulae 1. Because Fig. 2 represents the state in the 0-th cycle, the center coordinates is expressed by $(X_0, Y_0)$.

The center coordinates $(x_0, y_0)$ calculated from the formulae 1 represent the center of a virtual circle 10 illustrated in Fig. 2.

Then, the control unit 4 calculates the radius R of the virtual circle 10 from the following formulae 2.

[Math. 2]

$$r_i = \sqrt{(x_i - X)^2 + (y_i - Y)^2}$$

$$R = \frac{1}{i_{max}} \sum_{i=1}^{i_{max}} \sqrt{(x_i - X)^2 + (y_i - Y)^2}$$

With the formulae 2, respective distances $r_i$ (i = 1, 2, 3, 4, 5) between the center coordinates and the fingers A to E are calculated by putting the center coordinates $(X_0, Y_0)$ obtained from the formulae 1 and the respective position coordinates $(x_1, y_1)$, $(x_2, y_2)$, $(x_3, y_3)$, $(x_4, y_4)$ and $(x_5, y_5)$ of the fingers A to E into upper one of the formulae 2. Here, the radius $r_1$ represents the distance between the center coordinates and the finger A, and the radius $r_2$ represents the distance between the center coordinates and the finger B. The radius $r_3$ represents the distance between the center coordinates and the finger C, the radius $r_4$ represents the distance between the center coordinates and the finger D, and the radius $r_5$ represents the distance between the center coordinates and the finger E.

Then, an average value of the distances $r_1$, $r_2$, $r_3$, $r_4$ and $r_5$ is calculated from lower one of the formulae 2, and the calculated average value is regarded as the radius R of the virtual circle 10. Because Fig. 2 represents the state in the 0-th cycle, the radius calculated here is expressed by $R_0$.

The circumference of the circle with the radius $R_0$ from the center coordinates $(X_0, Y_0)$ passes the respective position coordinates or points near those position coordinates. In other words, the virtual circle 10 passing substantially the respective position coordinates is set such that the differences between the circumference and the respective position coordinates are minimized as far as possible.

Then, the control unit 4 calculates an average value (rotational angle $\Theta$) of angles formed by the respective position coordinates and the center coordinates from the following formulae 3.

[Math. 3]

$$\theta_i = \tan \frac{y_i - Y}{x_i - X}$$

$$\Theta = \frac{1}{i_{max}} \sum_{i=1}^{i_{max}} \tan^{-1} \frac{y_i - Y}{x_i - X}$$

With the formulae 3, respective angles $\theta_i$ (i = 1, 2, 3, 4, 5) formed by the center coordinates and the fingers A to E are determined by putting the center coordinates $(X_0, Y_0)$ obtained from the formulae 1 and the respective position coordinates $(x_1, y_1)$, $(x_2, y_2)$, $(x_3, y_3)$, $(x_4, y_4)$ and $(x_5, y_5)$ of the fingers A to E into upper one of the formulae 3. Here, the angle $\theta_1$ represents the angle formed by the finger A and the center coordinates, and the angle $\theta_2$ represents the angle formed by the finger B and the center coordinates. The angle $\theta_3$ represents the angle formed by the finger C and the center coordinates, the angle $\theta_4$ represents the angle formed by the finger D and the center coordinates, and the angle $\theta_5$ represents the angle formed by the finger E and the center coordinates.

Then, an average value of the angles $\theta_1$, $\theta_2$, $\theta_3$, $\theta_4$ and $\theta_5$ is calculated from lower one of the formulae 3, and the calculated average value is regarded as the rotational angle $\Theta$ of the virtual circle 10. Because Fig. 2 represents the state in the 0-th cycle, the rotational angle calculated here is expressed by $\Theta_0$.

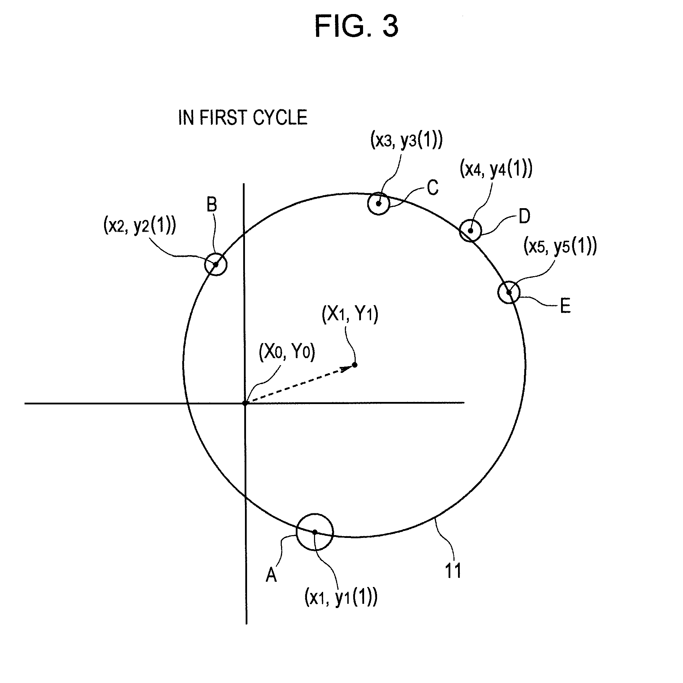

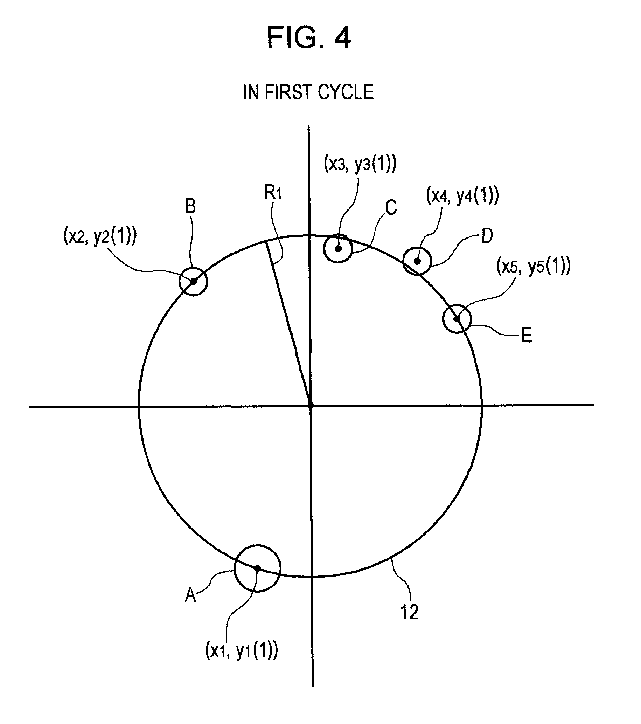

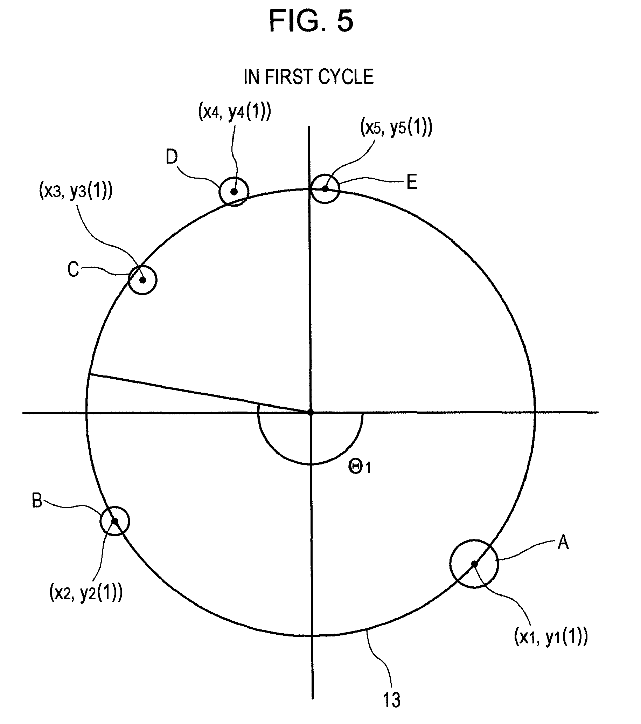

Assume now that the user linearly moves, from the state of Fig. 2, the fingers A to E as illustrated in Fig. 3. It is also assumed that a relative positional relation among the fingers A to E is the same as that in Fig. 1. Because Fig. 3 represents the state in the first cycle, (1) is attached to each set of the position coordinates illustrated in Fig. 3. Such denotation is similarly applied to Figs. 4 and 5.

Fig. 3 corresponds to the first cycle after the lapse of a predetermined time. The center coordinates $(X_1, Y_1)$, the radius $R_1$, and the rotational angle $\Theta_1$ of a virtual circle 11 in the first cycle are calculated from the above-mentioned formulae 1 to 3. Here, the term "cycle" implies a time interval at which the control unit 4 calculates the center coordinates, the radius, and the rotational angle of a virtual circle from the formulae 1 to 3 on the basis of the respective center coordinates detected by the detection unit 2. At what cycle the control unit 4 executes the calculation is a matter that is optionally determined.

As illustrated in Fig. 3, the center coordinates $(X_1, Y_1)$ in the first cycle is moved from the center coordinates $(X_0, Y_0)$ in the 0-th cycle. The control unit 4 transmits a change amount $(X_1-X_0, X_1-X_0)$ of the center coordinates with the lapse of time, as a scroll gesture signal, to the display device 5.

In the display device 5, the representation displayed on the operation surface 2 is scrolled in accordance with the change amount $(X_1-X_0, X_1-X_0)$. The scroll gesture signal is expressed by $(X_n-X_{n-1}. Y_n-Y_{n-1})$ (n = 1, 2, ...). Thus, in the second cycle, the difference between the center coordinates $(X_2, Y_2)$ in the second cycle and $(X_1, Y_2)$ in the first cycle is given as the scroll gesture signal. The above description is similarly applied to the subsequent cycles.

Assume here that, in the first cycle, the user moves the fingers A to E in the contracting direction as illustrated in Fig. 4. The relative positional relation among the fingers A to E is similar to that in Fig. 2.

Fig. 4 corresponds to the first cycle after the lapse of the predetermined time. The center coordinates $(X_1, Y_1)$, the radius $R_1$, and the rotational angle $\Theta_1$ of a virtual circle 12 in the first cycle are calculated from the above-mentioned formulae 1 to 3.

As illustrated in Fig. 4, the radius $R_1$ of the virtual circle 12 in the first cycle is smaller than the radius $R_0$ in the 0-th cycle. The control unit 4 transmits a change amount $(R_1-R_0)$ of the radius R with the lapse of time, as a zoom gesture signal, to the display device 5.

In the display device 5, the representation displayed on the operation surface 2 is zoomed in accordance with the change amount $(R_1-R_0)$ of the radius R. The zoom gesture signal is expressed by $(R_n-R_{n-1})$ (n = 1, 2, ...). Thus, in the second cycle, the difference between the radius $R_2$ in the second cycle and the radius $R_1$ in the first cycle is given as the zoom gesture signal. The above description is similarly applied to the subsequent cycles.

Alternatively, assume that, in the first cycle, the user rotates the fingers A to E as illustrated in Fig. 5. The relative positional relation among the fingers A to E is the same as that in Fig. 2.

Fig. 5 corresponds to the first cycle after the lapse of the predetermined time. The center coordinates $(X_1, Y_1)$, the radius $R_1$, and the rotational angle $\Theta_1$ of a virtual circle 13 in the first cycle are calculated from the above-mentioned formulae 1 to 3.

As illustrated in Fig. 5, the rotational angle $\Theta_1$ of the virtual circle 13 in the first cycle is smaller than the rotational angle $\Theta_0$ in the 0-th cycle. Namely, the fingers are rotated counterclockwise. The control unit 4 transmits a change amount $(\Theta_1-\Theta_0)$ of the rotational angle $\Theta$ with the lapse of time, as a rotate gesture signal, to the display device 5.

In the display device 5, the representation displayed on the operation surface 2 is rotated (turned) in accordance with the change amount $(\Theta_1-\Theta_0)$ of the rotational angle. The rotate gesture signal is expressed by $(\Theta_n-\Theta_{n-1})$ (n = 1, 2, ...). Thus, in the second cycle, the difference between the rotational angle $\Theta_2$ in the second cycle and the rotational angle $\Theta_1$ in the first cycle is given as the rotate gesture signal. The above description is similarly applied to the subsequent cycles.

In some cases, two or more of the scroll gesture signal, the zoom gesture signal, and the rotate gesture signal are transmitted as the operation signals to the display device 5 in response to the gesture of the fingers A to E. In one example of those cases, the representation is rotated while it is scrolled.

The center coordinates, the radius, and the rotational angle of the virtual circle may be all calculated. As an alternative, at least one of those parameters may be calculated. For example, when only the center coordinates are calculated, only the locus of the center coordinates is determined in each cycle. However, the center coordinates determined in such a case represents, as in the above-described case, the locus of the center of the virtual circle passing substantially the respective position coordinates.

While, in any of the 0-th cycle and the first cycle illustrated in Figs. 2 to 5, the five fingers A to E are detected by the detection unit 3, it is preferable to calculate the center coordinates, the radius, and the rotational angle of the virtual circle, expressed by the formulae 1 to 3, after waiting for that the number of the fingers detected by the detection unit 3 is determined stably. For example, if a contact state of some finger with respect to the operation surface 2 is unstable, the control unit 4 waits for a predetermined time until the contact state of the relevant finger is stabilized. Unless the contact state of the relevant finger is stabilized even after waiting for the predetermined time, the control unit 4 may calculate the center coordinates, the radius, and the rotational angle of the virtual circle with ignorance of the relevant finger.

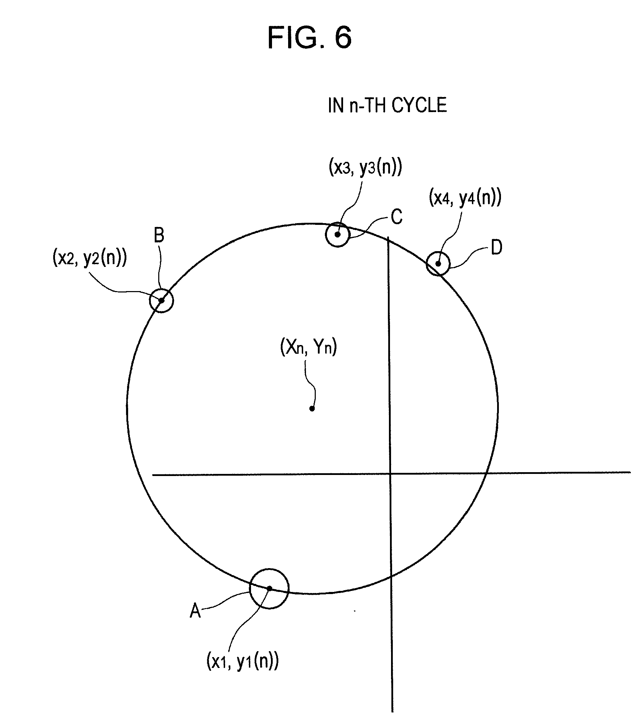

When the gesture given by the five fingers A to E is changed to a gesture given by the four fingers A to D in the n-th cycle as illustrated in Fig. 6, stable gesture signals can be obtained by calculating the center coordinates, the radius, and the rotational angle of the virtual circle on the basis of the respective position coordinates of the fingers A to D while the position coordinates of the finger E, which has been displaced in the n-th cycle, are ignored in each of the subsequent cycles. Because Fig. 6 represents the state in the n-th cycle, (n) is attached to each set of the position coordinates.

As an alternative, even with the five fingers A to E being detected as illustrated in Figs. 2 to 5, for example, the center coordinates, the radius, and the rotational angle of the virtual circle are not necessarily required to be determined by employing the position coordinates of all the fingers. Because the operation surface 2 can detect the respective contact areas of the fingers A to E, the calculation may be executed on the basis of the position coordinates of two or more fingers, for example, by always employing the position coordinates of the thumb, i.e., the finger A through specification of the thumb from the size of the contact area thereof, and by selecting at least one of the other fingers B to E.

Moreover, in the control unit 4, the rotational angle of the virtual circle can be properly calculated with wrap around control (the term "wrap around" implying an event that an angle exceeds the boundary between 0° and 359.999...°). When the rotational angle $\Theta_{n-1}$ in the (n-1)-th cycle is 0° and the rotational angle $\Theta_n$ in the n-th cycle is 359°, for example, the change amount of the rotational angle is 359° on condition that the change amount of the rotational angle is expressed by $(\Theta_n-\Theta_{n-1})$ as described above. With the wrap around control, however, the change amount of the rotational angle is set to -1° by assuming that the rotation is performed through 1° in the minus direction. When the rotational angle $\Theta_{n-1}$ in the (n-1)-th cycle is 359° and the rotational angle $\Theta_n$ in the n-th cycle is 0°, for example, the change amount of the rotational angle is -359° on condition that the change amount of the rotational angle is expressed by $(\Theta_n-\Theta_{n-1})$ as described above. With the wrap around control, however, the change amount of the rotational angle is set to 1° by assuming the rotational angle $\Theta_n$ in the n-th cycle to be 360°.

The shape of the operation surface 2 may be rectangular as illustrated in Fig. 1, or may be circular, etc. In particular, a preferred shape of the operation surface suitable for calculating the gesture signals illustrated in Figs. 2 to 6 is not limited to specific one.

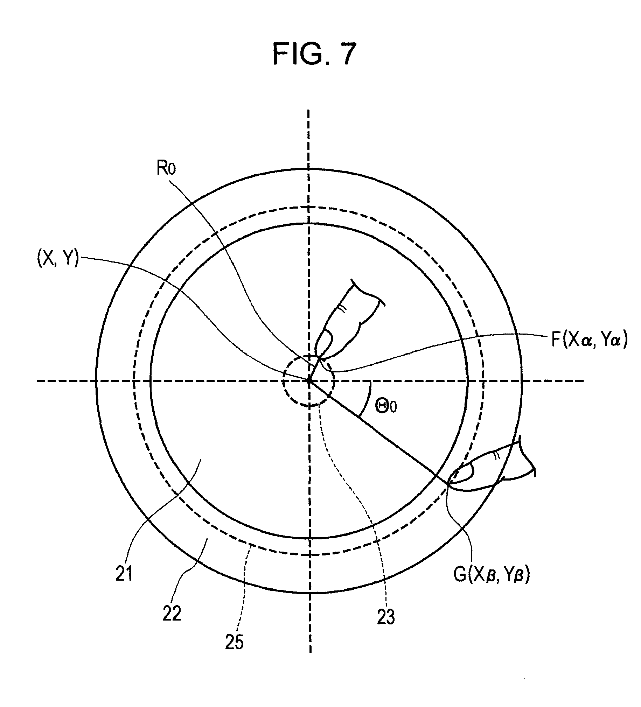

In Fig. 7, the center coordinates (X, Y) of the virtual circle is set in advance unlike the case of Fig. 2. In a second embodiment illustrated in Fig. 7, an operation surface 20 has a circular shape in a plan view. The operation surface 20 may be formed in a planar shape, or may be three-dimensionally formed substantially in a hemispheric shape.

As illustrated in Fig. 7, the operation surface 20 includes a small circular central region 21, and an outer peripheral region 22 positioned around the central region 21. Of those regions, the central region 21 is a scroll gesture region, and the outer peripheral region 22 is a rotate gesture region.

In the second embodiment of Fig. 7, the number of fingers moved for operation over the operation surface 20 may be one. Although Fig. 7 illustrates two fingers, those fingers represent operative states of one finger at different times. Thus, Fig. 7 represents the case of operating the operation surface 20 by one finger.

When one finger F is put on the central region 21 of the operation surface 20 as illustrated in Fig. 7, the position coordinates $(x_\alpha, y_\alpha)$ of the finger F are detected by the detection unit 3. Here, "$\alpha$" is a symbol for discrimination from the position coordinates of the finger F in the outer peripheral region 22. A symbol "$\beta$" is attached to the position coordinates of the finger F in the outer peripheral region 22 in Fig. 7.

Then, the radius $R_0$ of a virtual circle 23 is calculated from the above-mentioned formulae 2. The virtual circle 23 passes the position coordinates $(x_\alpha, y_\alpha)$ of the finger F. Because Fig. 7 represents the state in the 0-th cycle, the calculated radius is denoted by $R_0$.

Assume now that, as illustrated in Fig. 8, the finger F is moved to a position corresponding to position coordinates $(x_\gamma, y_\gamma)$ within the central region 21. Here, "$\gamma$" is a symbol for discrimination from the position coordinates of the finger F in the outer peripheral region 22. A symbol "$\varepsilon$" is attached to the position coordinates of the finger F in the outer peripheral region 22 in Fig. 8.

Then, the radius $R_1$ of a virtual circle 24 is calculated from the above-mentioned formulae 2. The virtual circle 24 passes the position coordinates $(x_\gamma, y_\gamma)$ of the finger F. Because Fig. 8 represents the state in the first cycle, the calculated radius is denoted by $R_1$. A change amount $(R_1-R_0)$ of the radius is then determined. The change amount $(R_1-R_0)$ of the radius can be used as the scroll gesture signal. Alternatively, $(x_\gamma-x_\alpha, y_\gamma-y_\alpha)$ may be used as the scroll gesture signal.

When one finger F is put on the outer peripheral region 22 of the operation surface 20 as illustrated in Fig. 7, the position coordinates $(x_\beta, y_\beta)$ of the finger G is detected by the detection unit 3. The rotational angle $\Theta_0$ of a virtual circle 25 is then calculated from the above-mentioned formulae 3. The virtual circle 25 passes the position coordinates $(x_\beta, y_\beta)$ of the finger G. Because Fig. 7 represents the state in the 0-th cycle, the calculated rotational angle is denoted by $\Theta_0$.

Assume now that, as illustrated in Fig. 8, the finger G is rotationally moved to a position corresponding to position coordinates $(x_\varepsilon, y_\varepsilon)$ within the outer peripheral region 22.

Then, the rotational angle $\Theta_1$ of a virtual circle 26 is calculated from the above-mentioned formulae 3. The virtual circle 26 passes the position coordinates $(x_\varepsilon, y_\varepsilon)$ of the finger G. Because Fig. 8 represents the state in the first cycle, the calculated rotational angle is denoted by $\Theta_1$. A change amount $(\Theta_1-\Theta_0)$ of the rotational angle is then determined. The change amount $(\Theta_1-\Theta_0)$ of the rotational angle can be used as the rotate gesture signal. The above description is similarly applied to the second and subsequent cycles.

Even when there are plural fingers (operating bodies) that are moved for operation at the same time over the operation surface 20 in Figs. 7 and 8, the gesture signals can be obtained by employing the formulae 2 and 3. In such a case, assuming that the center coordinates are previously set to (X, Y), the radius (i.e., an average value of distances between respective position coordinates and the center coordinates) and the rotational angle (i.e., an average value of angles formed by the respective position coordinates and the center coordinates) of a virtual circle are calculated.

According to the embodiments, in any of the first embodiment illustrated in Figs. 2 to 6 and the second embodiment illustrated in Fig. 7 and 8, a virtual circle is set on the basis of the position coordinates of at least one finger, which are detected by the detection unit 3, and change in at least one of the center coordinates, the radius, and the rotational angle of the virtual circle with the lapse of time is calculated as a gesture signal (operation signal). With the embodiments, the gesture signal can be simply and quickly obtained on the basis of the position coordinates, and the representation displayed on the operation surface can be changed in prompt response to a finger gesture.

According to the first embodiment illustrated in Figs. 2 to 6, when there are plural fingers that are moved for operation at the same time over the operation surface 2, the gesture signal can be simply and properly calculated on the basis of the respective position coordinates of the fingers. According to the first embodiment, the gesture signal can be properly calculated even when the number of fingers moved for operation at the same time over the operation surface 2 is three or more.

The second embodiment illustrated in Fig. 7 and 8 is different from the first embodiment in that the number of fingers moved for operation over the operation surface 20 may be one, and that the center coordinates (X, Y) of the virtual circle is set in advance. According to the second embodiment illustrated in Fig. 7 and 8, the scroll gesture signal and the rotate gesture signal, for example, can be calculated even with one finger. In Figs. 7 and 8, since the operation surface 20 is divided into the central region 21 and the outer peripheral region 22 such that the central region 21 serves as the scroll gesture region and the outer peripheral region 22 serves as the rotate gesture region, the user can simply and properly perform each finger gesture. In the embodiment of Figs. 7 and 8, the shape of the operation surface 20 is preferably circular in a plan view. With this feature, the user can more easily perform the rotate gesture particularly in the outer peripheral region 22.

Reference Signs List

A to G fingers (operating bodies)
$R_0$, $R_1$ radii of virtual circles
$\Theta_0$, $\Theta_1$ rotational angles of virtual circles
1 operation detection device
2, 20 operation surface
3 detection unit
4 control unit
5 display device
6, 7 electrodes
10, 11, 23 to 26 virtual circles
21 central region
22 outer peripheral region

**Claims**

An operation detection device comprising a detection unit capable of detecting position coordinates of at least one operating body moved for operation relative to an operation surface, and a control unit calculating an operation signal of the operating body on basis of the position coordinates,
wherein the control unit calculates, as the operation signal, change in at least one of center coordinates of a virtual circle passing substantially the position coordinates, a radius of the virtual circle, and a rotational angle of the virtual circle with lapse of time.
The operation detection device according to Claim 1, wherein the control unit calculates average coordinates of respective position coordinates of the plural operating bodies, which are moved for operation at the same time relative to the operation surface, as the center coordinates, an average value of distances between the center coordinates and the respective position coordinates as the radius, and an average value of angles formed by the center coordinates and the respective position coordinates as the rotational angle.
The operation detection device according to Claim 2, wherein change of the center coordinates with lapse of time is calculated as a scroll gesture operation signal, change of the radius with lapse of time is calculated as a zoom gesture operation signal, and change of the rotational angle with lapse of time is calculated as a rotate gesture operation signal.

The operation detection device according to Claim 1, wherein the center coordinates are set in advance, and when one operating body is moved for operation relative to the operation surface, the control unit calculates a distance between the position coordinates of the one operating body and the center coordinates as the radius, and an angle formed by the position coordinates of the one operating body and the center coordinates as the rotational angle.

The operation detection device according to Claim 4, wherein when the plural operating bodies are moved for operation at the same time relative to the operation surface, the control unit calculates an average value of distances between the center coordinates and the respective position coordinates of the plural operating bodies as the radius, and an average value of angles formed by the center coordinates and the respective position coordinates as the rotational angle.

The operation detection device according to Claim 4, wherein a center of the operation surface is set at the center coordinates.

The operation detection device according to Claim 4, wherein a central region of the operation surface is a region in which a scroll gesture is to be performed, an outer peripheral region around the central region is a region in which a rotate gesture is to be performed, change of the radius with lapse of time is calculated in the central region as the operation signal for the scroll gesture, and change of the rotational angle with lapse of time is calculated in the outer peripheral region as the operation signal for the rotate gesture.

The operation detection device according to Claim 4, wherein the operation surface has a circular shape in a plan view.

The operation detection device according to Claim 2, wherein when the number of the operating bodies detected is changed with lapse of time, the operation signal is calculated with ignorance of the position coordinates of the operating body that is not detected any more.

The operation detection device according to Claim 1, wherein the control unit executes wrap around control.

**Amended claims under Art. 19.1 PCT**

1.  (Currently Amended) An operation detection device comprising a detection unit capable of detecting position coordinates of at least one operating body moved for operation relative to an operation surface having center coordinates set in advance, and a control unit calculating an operation signal of the operating body on basis of the position coordinates,
    the control unit calculating, as the operation signal, change in at least one of a radius of a virtual circle having a center set at the center coordinates and passing substantially the position coordinates, and a rotational angle of the virtual circle with lapse of time,
    wherein when one operating body is moved for operation relative to the operation surface, the control unit calculates a distance between the position coordinates of the one operating body and the center coordinates as the radius, and an angle formed by the position coordinates of the one operating body and the center coordinates as the rotational angle, and
    wherein a central region of the operation surface is a region in which a first gesture is to be performed, an outer peripheral region around the central region is a region in which a second gesture is to be performed, change of the radius with lapse of time is calculated in the central region as the operation signal for the first gesture, and change of the rotational angle with lapse of time is calculated in the outer peripheral region as the operation signal for the second gesture.

2.  (Currently Amended) The operation detection device according to Claim 1, wherein the first gesture is a scroll gesture, and the second gesture is a rotate gesture.

3.  (Currently Amended) The operation detection device according to Claim 1, wherein when the plural operating bodies are moved for operation at the same time relative to the operation surface, the control unit calculates an average value of distances between the center coordinates and the respective position coordinates of the plural operating bodies as the radius, and an average value of angles formed by the center coordinates and the respective position coordinates as the rotational angle.

4.  (Currently Amended) The operation detection device according to Claim 1, wherein a center of the operation surface is set at the center coordinates.

**5.** (Currently Amended) The operation detection device according to Claim 1, wherein the operation surface has a circular shape in a plan view.

**6.** (Currently Amended) The operation detection device according to Claim 1, wherein the control unit executes wrap around control.

**7.** (Canceled)

**8.** (Canceled)

**9.** (Canceled)

**10.** (Canceled)

# FIG. 1

# FIG. 2

## IN 0-TH CYCLE

# FIG. 3

IN FIRST CYCLE

# FIG. 4

## IN FIRST CYCLE

# FIG. 5

IN FIRST CYCLE

# FIG. 6

IN n-TH CYCLE

# FIG. 7

FIG. 8

R1

F(Xᵧ, Yᵧ)

Θ1

24

21

22

26

G(Xε, Yε)

1

FIG. 9

| OPERATION SURFACE | DETECTION UNIT |
|---|---|
| 2 | 3 |

| DISPLAY DEVICE | CONTROL UNIT |
|---|---|
| 5 | 4 |

# FIG. 10

(a)

(b)

(c)

(d)

2

**INTERNATIONAL SEARCH REPORT**

| International application No. |
| --- |
| PCT/JP2014/054181 |

| A. CLASSIFICATION OF SUBJECT MATTER |
| --- |
| *G06F3/048*(2013.01)i, *G06F3/041*(2006.01)i, *G06F3/0488*(2013.01)i |

According to International Patent Classification (IPC) or to both national classification and IPC

| B. FIELDS SEARCHED |
| --- |
| Minimum documentation searched (classification system followed by classification symbols)<br>G06F3/048, G06F3/041, G06F3/0488 |

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>A | JP 2008-508600 A (Apple Inc.),<br>21 March 2008 (21.03.2008),<br>paragraphs [0043] to [0046], [0051] to [0074]<br>& US 2006/0026521 A1 & EP 2000893 A2<br>& WO 2006/020304 A2 & KR 10-2007-0039613 A<br>& CN 101052939 A | 1-6,8-10<br>7 |
| A | JP 2012-221073 A (Sony Corp.),<br>12 November 2012 (12.11.2012),<br>paragraphs [0048] to [0051]<br>& US 2012/0256856 A1 & EP 2508973 A1<br>& CN 102736785 A | 2,3 |
| A | JP 2008-158842 A (Xanavi Informatics Corp.),<br>10 July 2008 (10.07.2008),<br>paragraphs [0024] to [0028]<br>(Family: none) | 2,3 |

| ☒ Further documents are listed in the continuation of Box C. | ☐ See patent family annex. |
| --- | --- |

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 April, 2014 (07.04.14) | Date of mailing of the international search report<br>15 April, 2014 (15.04.14) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/054181 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 4-48318 A (Sony Corp.),<br>18 February 1992 (18.02.1992),<br>page 4, upper right column, line 11 to page 5,<br>lower right column, line 17<br>& US 5453761 A          & EP 462759 A2<br>& SG 54316 A1          & KR 10-0218766 B1 | 4 |
| A | JP 2010-39558 A (Canon Inc.),<br>18 February 2010 (18.02.2010),<br>paragraphs [0047] to [0052]<br>& US 2010/0026649 A1 | 1-10 |
| A | JP 2012-53623 A (Canon Inc.),<br>15 March 2012 (15.03.2012),<br>entire text; all drawings<br>(Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012203563 A